# EUROPEAN PATENT SPECIFICATION

(11) **EP 1 794 910 B1**
(45) Date of publication and mention of the grant of the patent: **06.07.2011**
(21) Application number: 05803674.0
(22) Date of filing: 29.09.2005
(51) Int. Cl.: H04J 3/16, H04Q 11/04

(54) **OVERHEAD PROCESSING AND GENERATION TECHNIQUES**
TECHNIKEN ZUR OVERHEADVERARBEITUNG UND -ERZEUGUNG
TECHNIQUES DE GENERATION ET DE TRAITEMENT DE DONNEES D'EN-TETE

(30) Priority: 29.09.2004 US 954947
(43) Date of publication of application: 13.06.2007
(73) Proprietor: Intel Corporation, Santa Clara, CA 95052 (US)
(72) Inventor: HO, Michael, BURNABY, , British Columbia V5C-2X6 (CA); QUNELL, Miriam, NAPERVILLE, Illinois 60540 (US); FEDDERS, Jeff, WESTMINSTER, Colorado 80020 (US); CAIA, Jean-Michel, SAN FRANCISCO, California 94112 (US)
(74) Representative: Dunlop, Hugh Christopher
(86) International application number: PCT/US2005/035378
(87) International publication number: WO 2006/039598

(56) References cited:
- US-A- 5 465 252
- US-A1- 2004 174 870
- US-B1- 6 314 097

## Description

### Related Art

Networks such as the Internet, Local Area Networks (LANs), and Wide Area Networks (WANs) typically transmit data between devices via packets or frames of data. Packets and frames typically include overhead and payload portions. Overhead portions can carry a variety of control and status information needed to maintain the well being of the network. Payload portions may carry data. As frame transmission rates in networks increase, it is desirable for network equipment to more rapidly process frames received from the network and prepare frames for transmission to the network.
US-B1-6 314 097 discloses a a transmission device wherein, *inter alia*, all the overheads in the lines including the overhead bytes to be relayed or broadcasted are processed by the overhead processing part.
US-A-2004/0174870 discloses an overhead handling method and system for high order data streams comprising presenting an incoming high order data stream as a plurality of component data streams transmitted in parallel; providing a common overhead processing unit (COHPU) capable of handling overhead bytes of a single one of said component data streams; forwarding to said COHPU overhead bytes of said component data streams in turn, while keeping docketing (ID) information for each particular overhead byte; processing each of the overhead bytes in the COHPU, and modifying the component data streams to obtain an outgoing high order data stream based on results of the processing and the ID information with respect to each of the processed overhead bytes.
US-A-5 465 252 discloses a method for receiving and delivering section overheads of and for STM-1 signals in a section-overhead server of a network nodes wherein said STM-1 signals are converted into a plurality of D39 signals.

### Brief Description of the Drawings

FIGs. 1A and 1B depict suitable system embodiments.

FIG. 2A depicts a framing system in accordance with an embodiment of the present invention.

FIG. 2B depicts an embodiment in which an overhead processor provides overhead to and processes overhead from multiple data processors, in accordance with an embodiment of the present invention.

FIGs. 3A and 3B depict examples of manners in which overhead can be arranged in a payload portion of a frame, in accordance with an embodiment of the present invention.

FIG. 4 provides a diagram of an example implementation of a data processor, in accordance with an embodiment of the present invention.

FIG. 5 provides a diagram of an example implementation of an overhead processor, in accordance with an embodiment of the present invention.

FIG. 6A depicts a flow diagram of one possible manner to process ingress units received from a network, in accordance with an embodiment of the present invention.

FIG. 6B depicts a flow diagram of one possible manner to process egress units to be transported to a network, in accordance with an embodiment of the present invention.

Note that use of the same reference numbers in different figures indicates the same or like elements.

### Detailed Description

Reference throughout this specification to "one embodiment" or "an embodiment" means that a particular feature, structure, or characteristic described in connection with the embodiment is included in at least one embodiment of the present invention. Thus, the appearances of the phrase "in one embodiment" or "an embodiment" in various places throughout this specification are not necessarily all referring to the same embodiment. Furthermore, the particular features, structures, or characteristics may be combined in one or more embodiments.

As used herein, a "packet" means a sequence of one or more symbols and/or values that includes overhead and payload portions. As used herein, a "frame" means a sequence of one or more symbols and/or values that includes overhead and payload portions. As used herein, "overhead" means one or more symbols and/or values that may be added to a digital signal that can be used to provide information relating to network operation and be used in the processing of packets or frames, including information such as, but not limited to, destination address, source address, administration, and maintenance. As used herein, a "payload" means data, such as a data field, block, or stream as well as packets and frames of any protocol format. As used herein, "encapsulation" means any packet or frame format for transporting information between source and destination devices. As used herein, "egress units" means any packet or frame to be transmitted to a network. As used herein, "ingress units" means any packet or frame received from a network.

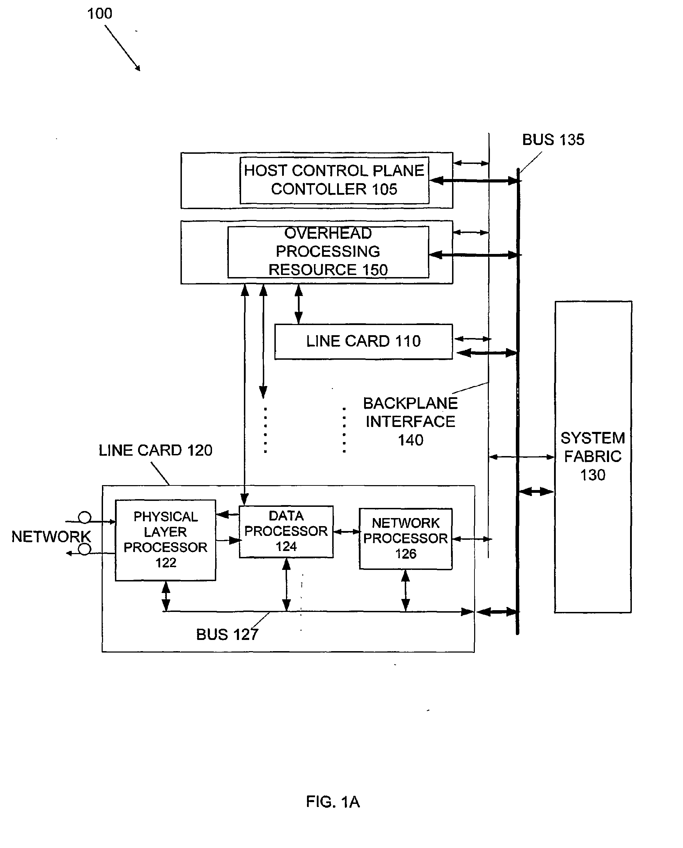

FIG. 1A depicts a suitable system embodiment in accordance with an embodiment of the present invention. System 100 may include line card 110, line card 120, host control plane controller 105, system fabric 130, bus 135, backplane interface 140, and overhead processing resource 150.

Host-control plane controller 105 may control and configure operations of all devices in system 100 (including but not limited to system fabric 130 and line cards 110 and 120). For example, host-control plane controller 105 may program/provision data processor 124 of line card 120 to control the arrangement of content in egress units and the processing of content of ingress units. Host-control plane controller 105 may communicate with devices in system 100 using bus 135. Host-control plane controller 105 may be implemented using a line card.

Bus 135 may provide intercommunication among host-control plane controller 105, overhead processing resource 150, line card 110, line card 120, and system fabric 130. Bus 135 may comply with Peripheral Component Interconnect (PCI) Local Bus Specification, Revision 2.2, December 18, 1998 available from the PCI Special Interest Group, Portland, Oregon, U.S.A. (as well as revisions thereof); PCI Express described in The PCI Express Base Specification of the PCI Special Interest Group, Revision 1.0a (as well as revisions thereof); or PCI-X Specification Rev. 1.0a, July 24, 2000, available from the aforesaid PCI Special Interest Group, Portland, Oregon, U.S.A., although other standards may be used.

Line card 110 may be implemented as a SONET/SDH add-drop multiplexer, a Fibre Channel compatible line input, an Ethernet line input, a SONET/SDH line input, or a line card similar to line card 120, although line card 110 may provide other operations.

Line card 120 may be implemented as a transceiver capable of transmitting egress units to a network and receiving ingress units from a network in compliance with SONET/SDH as well as other protocols such as OTN, although other standards may be used. For example, the network may be any network such as the Internet, an intranet, a local area network (LAN), storage area network (SAN), a wide area network (WAN). For example, SONET/ SDH and OTN are described for example in: ITU-T Recommendation G.709 Interfaces for the optical transport network (OTN) (2001); ANSI T1.105, Synchronous Optical Network (SONET) Basic Description Including Multiplex Structures, Rates, and Formats; Bellcore Generic Requirements, GR-253-CORE, Synchronous Optical Network (SONET) Transport Systems: Common Generic Criteria (A Module of TSGR, FR-440), Issue 1, December 1994; ITU Recommendation G.872, Architecture of Optical Transport Networks, 1999; ITU Recommendation G.825, "Control of Jitter and Wander within Digital Networks Based on SDH" March, 1993; ITU Recommendation G.957, "Optical Interfaces for Equipment and Systems Relating to SDH", July, 1995; ITU Recommendation G.958, Digital Line Systems based on SDH for use on Optical Fibre Cables, November, 1994; and/or ITU-T Recommendation G.707, Network Node Interface for the Synchronous Digital Hierarchy (SDH) (1996).

One embodiment of line card 120 may include physical layer processor 122, data processor 124, and network processor 126, and bus 127. Physical layer processor 122 may receive optical or electrical signals from a network and prepare the signals for processing by downstream elements such as data processor 124. For example, for ingress units, physical layer processor 122 may convert an optical signal to electrical format, perform physical layer processing, and/or remove jitter from signals from the network. For egress units, physical layer processor 122 may remove jitter from signals provided by upstream devices such as data processor 124, perform physical layer processing, and prepare signals for transmission to the network, which may be optical or electrical format.

Data processor 124 may utilize embodiments of the present invention to construct egress units in formats such as SONET/SDH and/or OTN (although other formats may be used). For ingress units, data processor 124 may utilize embodiments of the present invention to process such ingress units in compliance with formats such as SONET/SDH and/or OTN (although other formats may be used).

Network processor 126 may provide payloads to data processor 124 for encapsulation and transmission to a network in egress units. Network processor 126 may receive payloads from ingress units from data processor 124. For example, data processor 124 and network processor 126 may intercommunicate using an interface compatible for example with SPI-4 (described for example in the Optical Internetworking Forum document OIF-SPI4-02.1), although interfaces compatible with other standards may be used.

Network processor 126 may perform layer 2 or layer 3 (as well as other higher layer level) processing on payloads provided by and to data processor 124 as well as operations such as, but not limited to, classification, metering and policing, queue management, transmit scheduling, and traffic shaping in conformance with applicable protocols. For example, network processor 126 also may perform traffic management at the internet protocol (IP) layer (described for example in RFC 791 (1981) available from the Defense Advanced Research Projects Agency). Network processor 126 may intercommunicate with switch fabric 130 using backplane interface 140 to transfer and receive packets/frames having formats such as, but not limited to, High Level Data Link Control (HDLC), internet protocol (IP), Asynchronous Transfer Mode (ATM), Generic Framing Procedure (GFP), and Ethernet.

Bus 127 may provide intercommunication among physical layer processor 122, data processor 124, and network processor 126. Bus 127 may be compliant with the same standards as those of bus 135.

In one embodiment, components of line card 120 may be implemented among the same integrated circuit. In one embodiment, components of line card 120 may be implemented among several integrated circuits that intercommunicate using, for example, a bus or conductive leads of a motherboard. In one embodiment, components of line card 120 may be implemented as any or a combination of: hardwired logic, software stored by a memory device and executed by a microprocessor, firmware, an application specific integrated circuit (ASIC), and/or a field programmable gate array (FPGA).

Overhead processing resource 150 may provide overhead for inclusion in egress units to line cards 110 and 120 as well as other line cards which are not depicted. Overhead processing resource 150 may receive overhead from ingress units for processing. Overhead processing resource 150 may intercommunicate with line cards 110 and 120 as well as other line cards which are not depicted using, for example, at least one serial or parallel optical or electrical link. In one embodiment, overhead processing resource 150 may intercommunicate with host control plane controller 105, line cards 110 and 120 as well as other line cards which are not depicted using system fabric 130 and/or bus 135. In one embodiment, overhead processing resource 150 may intercommunicate with line cards 110 and 120 as well as other line cards which are not depicted using an Advanced Telecom Computing Architecture (ATCA) compliant motherboard. In one embodiment, overhead processing resource 150 may be implemented using one or more integrated circuits interconnected and accessible using a single line card.

Backplane interface 140 may be implemented as a single or multi-pin interface and may be used by line cards to intercommunicate with system fabric 130 or to intercommunicate with other line cards. For example, backplane interface 140 may be compatible with TFI-5 (described, for example, in TDM Fabric to Framer Interface Implementation Agreement (2003) available from the Optical Internetworking Forum (OIF)) or CSIX (described in CSIX-L1: Common Switch Interface Specification-L1 (2000)), although other standards may be used. System fabric 130 may transfer payloads as well as other information among line cards based on relevant address and header information. System fabric 130 can be implemented as a packet switch fabric or a time domain multiplexing (TDM) cross connect.

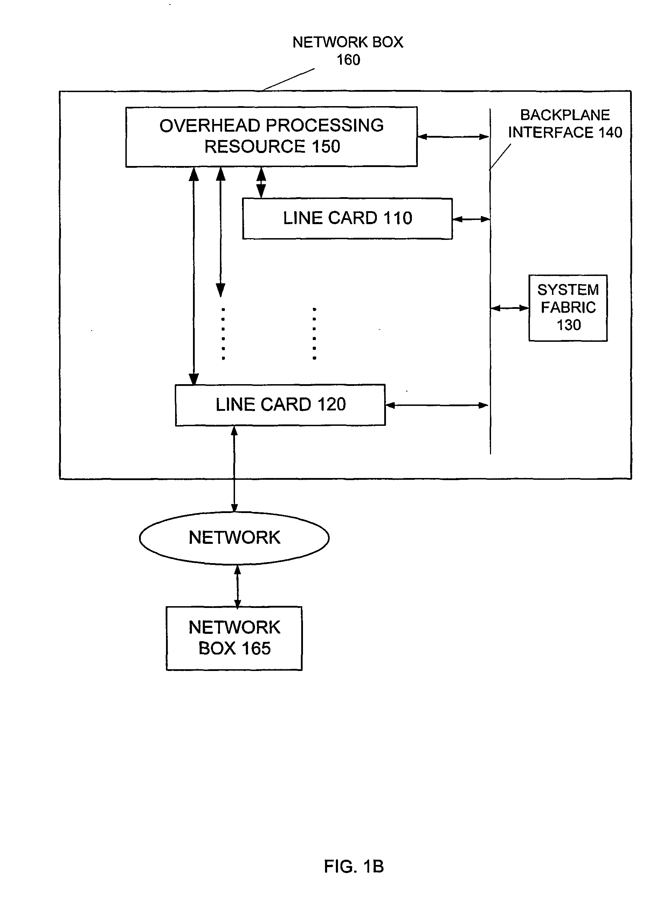

FIG. 1B depicts a configuration of an embodiment of the present invention in which an overhead processing resource 150 may be situated in a different network box than the device which requests its use. For example, a "network box" may include a physical casing, a backplane interface capable of providing intercommunication among numerous line cards, and a device (such as but not limited to a line card) that provides intercommunication between the network box and a network. The network may be any network such as the Internet, an intranet, a local area network (LAN), storage area network (SAN), a wide area network (WAN). A first network box may house overhead processing resource 150 and the overhead processing resource 150 may be accessible by devices physically located within its network box or any device that can intercommunicate with the network box which houses the overhead processing resource 150. For example a device such as a line card in a network box 165, separate from network box 160, may utilize overhead processing resource 150 in network box 160.

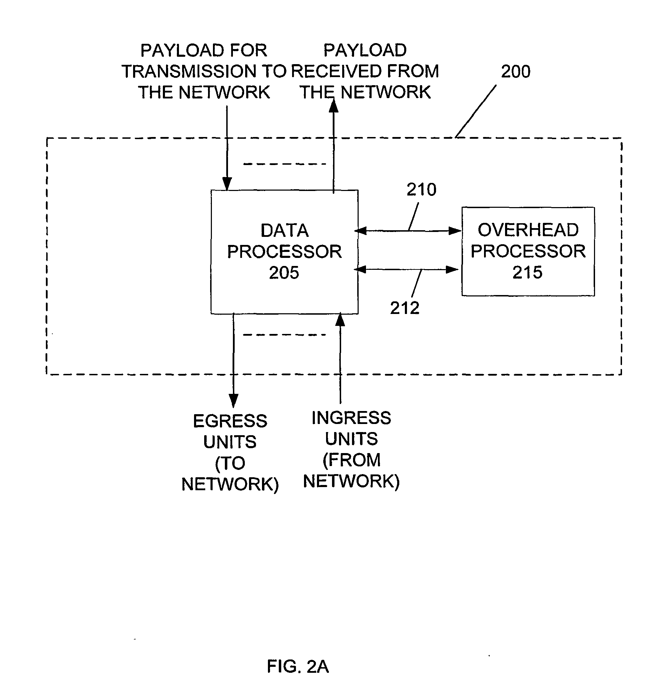

FIG. 2A depicts a framing system 200 in accordance with an embodiment of the present invention. For example, framing system 200 may include data processor 205, communications link 210, overhead request line 212, and overhead processor 215. For payloads received by data processor 205 for transmission to the network, framing system 200 may generate overhead, form egress units including the overhead and payloads, and transfer egress units to the network. For example, payloads may include packets and frames having formats such as, but not limited to, HDLC, IP, ATM, GFP, and Ethernet. For ingress units, framing system 200 may process overhead associated with the ingress units and transfer payload from the ingress units to another device such as a host control processor, a network processor, or another line card.

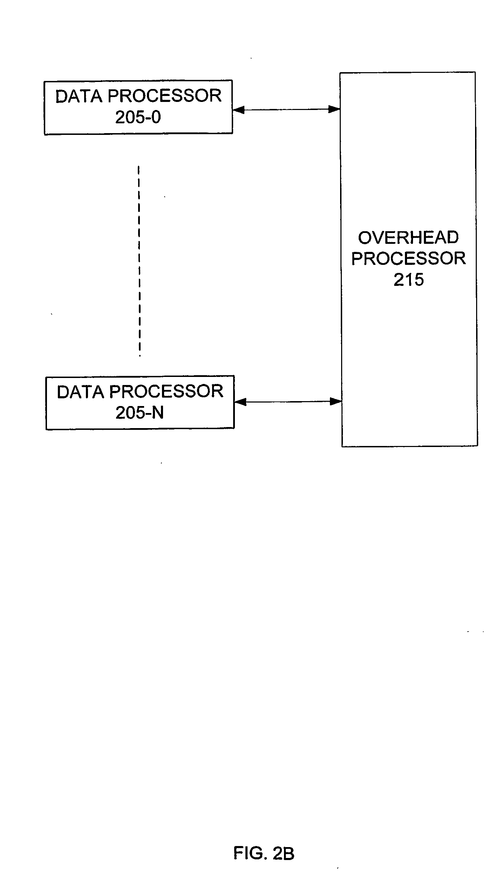

FIG. 2B depicts an embodiment of the present invention in which an overhead processor 215 provides overhead to multiple data processors 205-0 to 205-N and processes overhead from data processors 205-0 to 205-N in a manner similar to that described with respect to FIG. 2A. For example, host-control plane controller may manage the utilization of overhead processor 215 by each of data processors 205-0 to 205-N. Other arrangements of overhead processors to data processors are possible. The utilization ratio among overhead processors and data processors can be X:Y, where X represents a number of overhead processors utilized by Y data processors. In the example of FIG. 2B, X = 1, however X can be increased to a different integer.

With respect to ingress units, data processor 205 may process a portion of overhead and transfer a portion of the overhead to overhead processor 215 for processing. With respect to payload received by data processor 205 and to be transmitted through a network to a destination device in an egress unit, data processor 205 may provide a portion of overhead and combine a portion of the overhead with overhead received from overhead processor 215 to form such egress unit.

In one embodiment, data processor 205 and overhead processor 215 may divide responsibility for processing or generating overhead. For example, in one embodiment, data processor 205 may generate or process overhead that is more time critical than that generated or processed by overhead processor 215. For example, in one embodiment, data processor 205 may generate or process overhead that can be generated or processed within a time period to generate or process an associated ingress or egress unit (i.e., generating or processing of the overhead tracks generation or processing of the associated ingress or egress unit). For example, in one embodiment, overhead processor 215 may generate or process overhead that can lag formation or processing of an associated egress or ingress unit, such as within a time to generate a next sequential ingress or egress unit, although other latency periods may be used.

For example, in one embodiment, data processor 205 may generate or process overhead relating at least to packet or frame delineation, payload delineation, as well as bit error monitoring and counting. For example, in one embodiment, overhead processor 215 may generate or process overhead related to management of nodes such as control channels, user channels, and user side band communication channels. For example, for SONET/SDH, data processor 205 may generate or process: (1) delineation overhead bytes A1, A2; (2) pointer overhead bytes H1, H2, H3; (3) state monitoring overhead bytes B1, B2, M0, M1; (4) trace identification overhead byte J0; and (5) protection signaling and alarm indication overhead bytes K1, K2; whereas overhead processor 215 may process or generate control channel overhead bytes D1-D12, E1, E2, F1, F2, F3, K3, and a portion of the N1 byte, although other allocations may be used. For example, J0, K1, and K2 bytes may be processed or generated by data processor 205 or overhead processor 215.

For example, in one embodiment of the present invention, for ingress units, data processor 205 may transfer overhead to overhead processor 215 using payload portions of a standardized transport packet or frame, which can be Ethernet, TFI-5, OTN or SONET/SDH compliant, although other formats may be used. Similarly, in one embodiment of the present invention, overhead processor 215 may transfer overhead to data processor 205 for inclusion in egress units, using payload portions of a standardized transport packet or frame, which can be Ethernet, TFI-5, OTN or SONET/SDH compliant, although other formats may be used. In one embodiment, the standardized transport packet or frame carrying overhead in its payload portion may be transmitted according to timing specified in the relevant standard (e.g., periodically). In one embodiment, the standardized transport packet or frame carrying overhead in its payload portion may be transmitted prior to filling of the payload portion.

In one embodiment, overhead transported in the payload portions of standardized transport packets or frames from multiple data processors or overhead processors may be combined together and provided into a single standardized transport packet or frame. For example, a cross connect device (not depicted) may be used to groom overhead transported in payload portions of multiple standardized transport packets or frames and combine the overhead into a payload portion of a single standardized transport packet or frame. Conversely, the cross connect device may be used to disaggregate overhead transported in a payload portion of a single standardized transport packet or frame for transmission among payload portions of multiple standardized transport packets or frames. In one embodiment, the cross connect device may be implemented as part of a switch fabric.

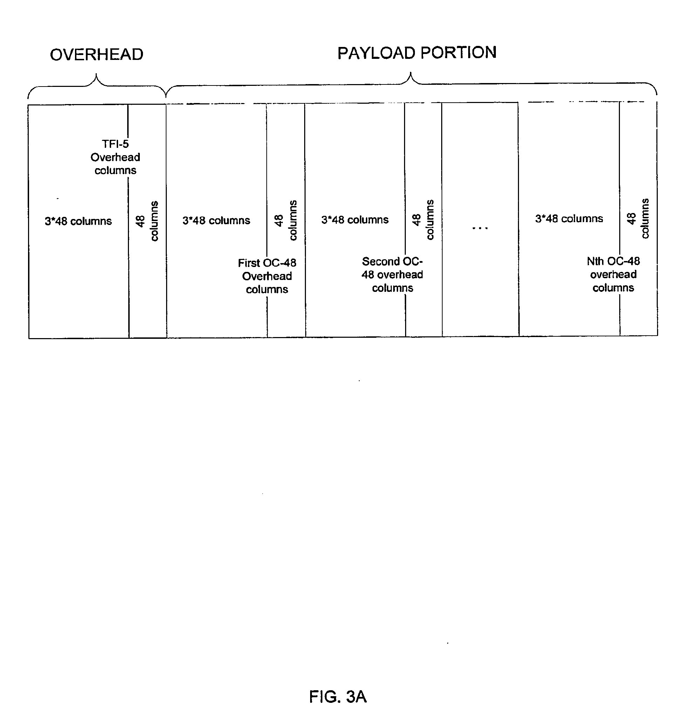

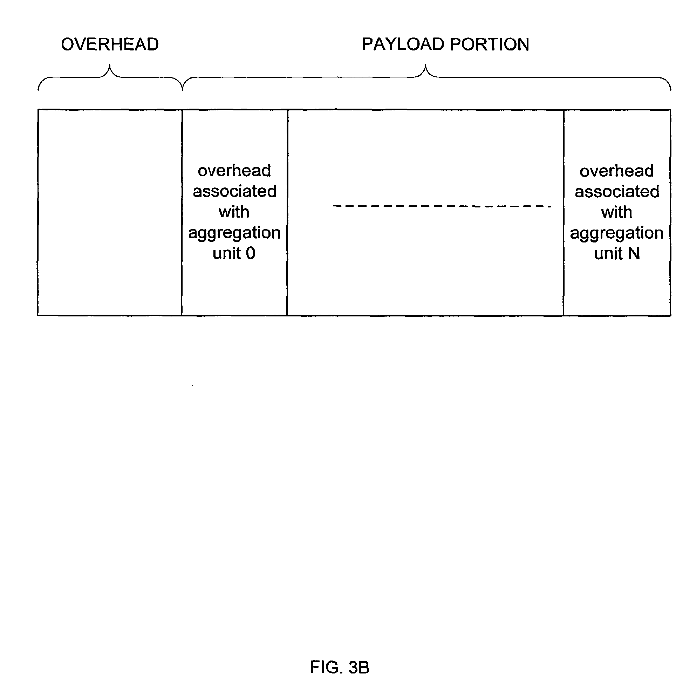

In one embodiment, overhead may be provided into a payload portion of a standardized frame in accordance with the examples described with respect to FIGs. 3A or 3B, although other formats may be used. FIG. 3A depicts an example of one possible manner in which overhead from OC-48 SONET/SDH frames (received as ingress units) can be provided into a payload portion of a TFI-5 frame for transmission from data processor 205 to overhead processor 215, although other schemes can be used. The example of FIG. 3A can also be used in transport of overhead from overhead processor 215 to data processor 205 for inclusion in OC-48 SONET/SDH frames (to be transmitted as egress units), although other schemes can be used. As shown, a TFI-5 frame includes overhead and payload portions. For example, the overhead portion may include one-hundred ninety two (192) columns whereas the payload portion may include four-thousand-one-hundred-seventy-six (4176) columns. Each of the overhead and payload portions may include nine (9) rows. In this example, overhead from or for sequential OC-48 frames can be provided in sequential columns within the payload portion. In this example, overhead from approximately twenty-one (21) worth of OC-48 frames can be carried in the payload portion of a single TFI-5 frame. For example, an arrangement of overhead from tributaries in an OC-48 container (e.g., STS-1, STS-3, STS-12, VT1.5, VT2, etc.) may be arranged in interleaving and/or virtual concatenation schemes according to SONET/SDH standards.

In one embodiment, overhead in a payload portion of a standardized transport packet or frame may be arranged based on an associated aggregation unit. For example, an aggregation unit may be a link or destination. For example, to provide overhead associated with a specified aggregation unit, data processor 205 and overhead processor 215 can instruct each other (or be instructed by host control plane controller 105) where overhead is to be positioned in a payload of a standardized transport packet or frame for a given aggregation unit and how to encapsulate and de-encapsulate the overhead. Each column of a frame can be allocated for a specific aggregation unit, although other schemes may be used. For example, FIG. 3B depicts an example frame that stores overhead associated with aggregation units 0 to N in a payload portion, in accordance with an embodiment of the present invention. For example, overhead to be transmitted to aggregation units 0 to N or received from aggregation units 0 to N may be arranged as columns in the payload portion of a frame. The arrangement shown in FIG. 3B may be used for overhead transmitted from data processor 205 to overhead processor 215 and vice versa. Other arrangements of overhead may be used.

Data processor 205 may be implemented as any or a combination of: hardwired logic, software stored by a memory device and executed by a microprocessor, firmware, an application specific integrated circuit (ASIC), and/or a field programmable gate array (FPGA).

In one embodiment, data processor 205 may transfer overhead in the payload portion of a standardized transport packet or frame to overhead processor 215 using communications link 210. In one embodiment, overhead processor 215 may transfer overhead in the payload portion of a standardized transport packet or frame to data processor 205 using communications link 210. In one embodiment, communications link 210 may be implemented as an electrical or optical transfer line of serial or parallel capability. For example, communications link 210 may be compatible with XAUI (described in IEEE 802.3ae) or current-mode logic (CML), although other techniques may be used.

In one embodiment, communications link 210 may be implemented using a backplane interface and switch fabric or a network, although other implementations may be used. For example, data processor 205 may transfer overhead in the payload portion of a standardized transport packet or frame to overhead processor 215 by providing the packet or frame to backplane interface 140 for transfer to the appropriate line card (or device) using system fabric 130. Similarly, in one embodiment, overhead processor 215 may transfer overhead in the payload portion of a standardized transport packet or frame to data processor 205 by providing the packet or frame to backplane interface 140 for transfer to the appropriate line card (or device) using system fabric 130.

Overhead request line 212 may be used to control overhead insertion into payload portions of standardized transport packets or frames. For example, data processor 205 may use overhead request line 212 to request overhead processor 215 to provide overhead at a specified time or in specified bit location(s) in a payload portion of a standardized transport packet or frame. For example, data processor 205 may use overhead request line 212 to request overhead processor 215 to provide overhead for transmission in an egress unit or to an aggregation unit at a specified time or in specified bit locations in a payload portion of a standardized transport packet or frame. Similarly, overhead processor 215 may use overhead request line 212 to request data processor 205 to provide overhead at a specified time or in specified bit location(s) in a payload portion of a standardized transport packet or frame. Overhead processor 215 may use overhead request line 212 to request overhead from data processor 205 from specific ingress units or aggregation units at specified times or specified bit locations in a payload portion of a standardized transport packet or frame. Overhead processor 215 may use overhead request line 212 to request data processor 205 not to transfer overhead generally or not to transfer overhead from specific aggregation units. For example, a decision not to transfer overhead may be based on the storage capacity of overhead processor 215.

In one embodiment, a master synchronizer (not depicted) distinct from data processor 205 and overhead processor 215 may be used to control data processor 205 and overhead processor 215 to synchronize overhead generation timing and placement for specified aggregation units in a payload portion of a standardized transport packet or frame. In one embodiment, overhead request line 212 may be implemented as a link such as a TTL I/O compatible link, although other techniques may be used. In one embodiment, overhead request line 212 may be implemented by communications using packets or frames transmitted using system fabric 130. For example, the packets or frames may be Ethernet, TFI-5, OTN or SONET/SDH compliant, although other formats may be used.

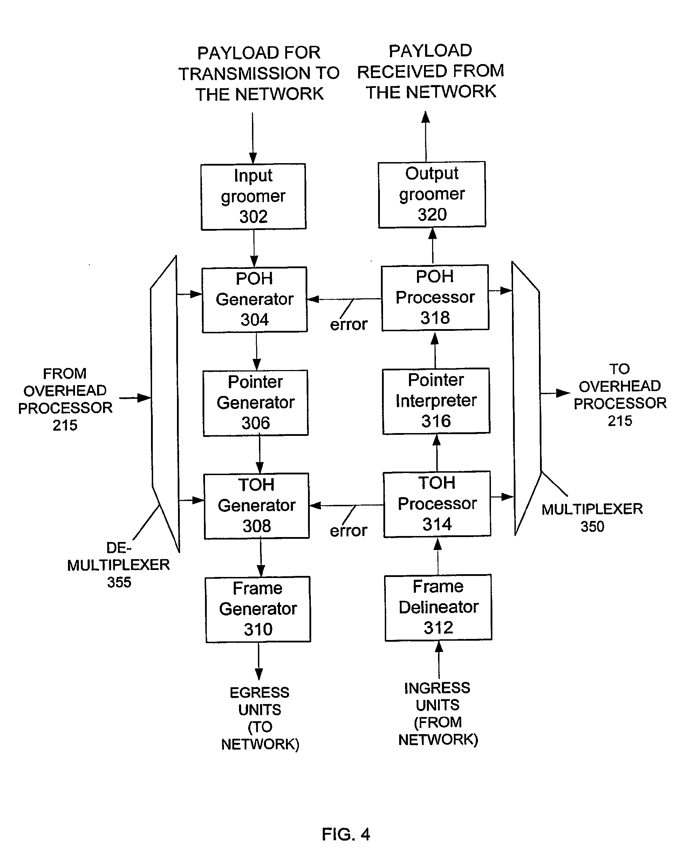

For example, FIG. 4 provides an example implementation of data processor 205, in accordance with an embodiment of the present invention, although other implementations may be used. For example, one embodiment of data processor 205 may include: input groomer 302, POH generator 304, pointer generator 306, TOH generator 308, frame generator 310, frame delineator 312, TOH processor 314, pointer interpreter 316, POH processor 318, and output groomer 320. A system memory (not depicted) may be utilized to store overhead received from data processor 205 and to store overhead to be transferred to data processor 205.

For example, input groomer 302, POH generator 304, pointer generator 306, TOH generator 308, and frame generator 310 may prepare egress units for transmission to a network. For example, frame delineator 312, TOH processor 314, pointer interpreter 316, POH processor 318, and output groomer 320 may process ingress units from the network.

With reference first to ingress units, frame delineator 312 may search for an ingress unit boundary and mark the boundary. With respect to ingress units encoded according to SONET/SDH, frame delineator 312 may process A1 and A2 bytes from the ingress units. For example, TOH processor 314 may filter and accept messages carried in the transport overhead. Based on analysis of line and section overhead, TOH processor 314 may indicate line or section overhead errors to TOH generator 308. TOH processor 314 may also communicate line and section overhead errors to overhead processor 215 for processing. In one embodiment, for SONET/SDH, TOH processor 314 may provide overhead bytes D1-D12, E1, E2, and/or F1 bytes from ingress units for transfer to overhead processor 215. In one embodiment, for SONET/SDH, TOH processor 314 may process J0, K1, and K2 bytes from ingress units. In one embodiment, for SONET/SDH, TOH processor 314 may transfer J0, K1, and/or K2 bytes from ingress units to overhead processor 215 for processing.

For example, pointer interpreter 316 may interpret pointers contained in line and section overhead in order to find the start of a payload portion. With respect to SONET/SDH, pointer interpreter 316 may process H1, H2, H3 bytes from ingress units. For example, POH processor 318 may filter and accept messages carried in path overhead. Based on analysis of path overhead, POH processor 318 may indicate path overhead errors to POH generator 304. Further, POH processor 318 may communicate path overhead errors to overhead processor 215. For example, for SONET/SDH, POH processor 318 may process B1, B2, M0, and M1 bytes from ingress units. For example, for SONET/SDH, POH processor 318 may provide overhead bytes F2, F3, K3, and/or portions of N1 bytes from ingress units to overhead processor 215.

For example, output groomer 320 may groom and cross connect payloads of ingress units in accordance for example with applicable standards such as SONET/SDH and OTN. Output groomer 320 may transfer payloads to the system fabric or a network processor. The payload may include data, information, or packets and frames having formats such as, but not limited to, HDLC, IP, ATM, GFP, and Ethernet.

Multiplexer 350 may encapsulate overhead and information at least from TOH processor 314 and POH processor 318 for transport to overhead processor 215 in a payload portion of a standardized transport frame, which can be a Ethernet, TFI-5, OTN, or SONET/SDH compliant frame, although other formats may be used.

De-multiplexer 355 may de-encapsulate overhead and information from overhead processor 215 provided in a payload portion of a standardized transport frame, which can be a Ethernet, TFI-5, OTN, or SONET/SDH compliant frame, although other formats may be used. De-multiplexer 355 may transfer overhead and information to at least POH generator 304 and TOH generator 308.

For example, input groomer 302 may sort and organize data, information, packets, and/or frames from the system fabric or network processor. For example, based on path overhead error communication from POH processor 318 as well as path overhead provided by overhead processor 215, POH generator 304 may generate messages to communicate path overhead error in the path overhead bytes to the appropriate destination device, such as to the appropriate aggregation unit. For example, for SONET/SDH, POH generator 304 may receive overhead bytes F2, F3, K3, and/or portion of N1 bytes from overhead processor 215 for inclusion in an egress unit. In one embodiment, for SONET/SDH, POH generator 304 may generate B1, B2, M0, and M1 bytes for inclusion in an egress unit.

Pointer generator 306 may generate pointers to allow the appropriate destination device to find the start of the payload portion in an egress unit. In one embodiment, for SONET/SDH, pointer generator 306 may generate H1, H2, H3 bytes for inclusion in an egress unit.

For example, based on line or section overhead error communication from TOH processor 314 as well as overhead provided by overhead processor 215, TOH generator 308 may generate the messages in line or section overhead to communicate line or section overhead errors to the appropriate destination device. For example, in SONET/SDH, line or section overhead errors may cause insertion of Alarm Indication Signal (AIS) into a frame to be transferred to a downstream device. For example, for SONET/SDH, TOH generator 308 may receive overhead bytes D1-D12, E1, E2, and/or F1 from overhead processor 215 for inclusion in an egress unit. In one embodiment, for SONET/SDH, TOH generator 308 may generate J0 and K1, K2 bytes for inclusion in an egress unit; however, in one embodiment, for SONET/SDH, overhead processor 215 may provide J0, K1, and/or K2 bytes for inclusion in an egress unit.

For example, frame generator 310 may provide overhead for an egress unit and identify each egress unit boundary. In one embodiment, for SONET/SDH, frame generator 310 may generate A1 and A2 bytes for inclusion in an egress unit.

Reference will now be made to FIG. 2A. For ingress units, overhead processor 215 may process overhead provided by data processor 205. For egress units, overhead processor 215 may provide overhead to data processor 205 for insertion into such egress units. Overhead processor 215 may process or generate control channel overhead and information relating to: (1) coordination among network nodes of content and positional placement in the payload as well as payload encapsulation schemes for ingress and egress units based on messages carried in the overhead; (2) maintenance of control channels; and (3) network topology discover (e.g., location of nodes). The results of processing of (1) may be used by the host-control plane controller which may reprogram or reprovision data processor 205 to change content arrangement of an egress unit payload. The results of processing of (2) may be provided to the host-control plane controller and forwarded by the host-control plane controller to the user and/or translated into commands to data processor 205 to reprogram or reprovision data processor 205 to change content arrangement of an egress unit payload. The results of processing of (3) may be used by the host-control plane controller to reprogram or reprovision data processor 205 to change content arrangement of an egress unit payload. For example, Optical Internetworking Forum (OIF) User Network Interface (UNI) 1.0 Signaling Specification (2001) describes an example manner to generate and process control channel overhead. For example, in one embodiment, for SONET/SDH, overhead processor 215 may generate or process the D1-D12, E1, E2, F1, F2, F3, K3, and a portion of N1 bytes as well as J0, K1, and/or K2 bytes.

Overhead processor 215 may be implemented as any or a combination of: hardwired logic, software stored by a memory device and executed by a microprocessor, firmware, an application specific integrated circuit (ASIC), and/or a field programmable gate array (FPGA).

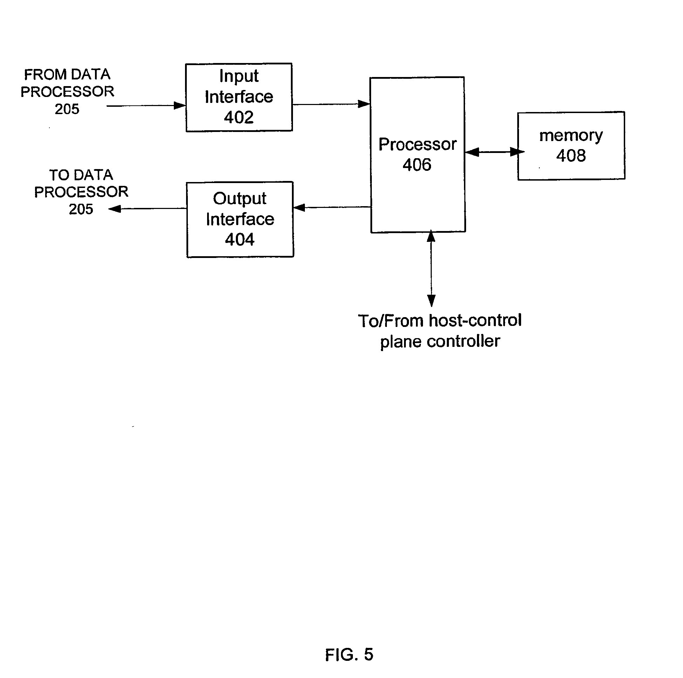

For example, FIG. 5 depicts an example implementation of an overhead processor 215, in accordance with an embodiment of the present invention. For example, one embodiment of overhead processor 215 includes input interface 402, output interface 404, processor 406, and memory 408.

For example, input interface 402 extracts overhead from a payload portion of a standardized transport packet or frame from data processor 205 and stores overhead into memory 408, which is accessible by processor 406. For overhead received from input interface 402, processor 406 processes overhead and updates the host-control plane controller in compliance with the relevant specifications or protocols such as SONET/SDH, OIF UNI 1.0 Signaling Specification, or OTN. For example, for SONET/SDH, processor 406 may process D1-D12, E1, E2, F1, F2, F3, K3, and a portion of N1 bytes as well as J0, K1, and/or K2 bytes.

Processor 406 may generate overhead for transfer through output interface 404 to data processor 205. For example, processor 406 may generate overhead using control plane applications that at least uses a database of I/O protocols, network topology, contents of overhead contents, filters, states, network port configurations, encounters, network topology, and latency information from memory 408 in accordance with commands from the host-control plane controller and in compliance with the relevant specifications or protocols such as SONET/SDH, OIF UNI 1.0 Signaling Specification, or OTN. For example, for SONET/SDH, processor 406 may generate control channel overhead bytes D1-D12, E1, E2, F1, F2, F3, K3, and a portion of N1 bytes as well as J0, K1, and/or K2 bytes. For example, according to fill instructions from processor 406, output interface 404 may insert overhead into payload portions of standardized transport packets or frames, which can be TFI-5, OTN or SONET/SDH compliant, although other formats may be used. The standardized transport packets or frames can be transported to a data processor 205.

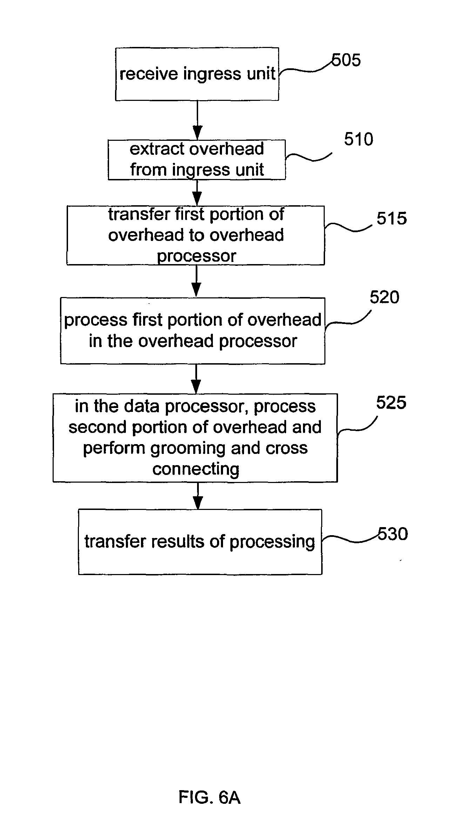

FIG. 6A depicts a flow diagram of one possible manner to process ingress units received from a network, in accordance with an embodiment of the present invention. Action 505 may include receiving in a data processor an ingress unit from a network. Action 510 may include the data processor extracting overhead from the ingress unit.

Action 515 may include the data processor transferring a first portion of overhead from the ingress unit to an overhead processor using a payload portion of a standardized transport packet or frame, which can be a TFI-5, OTN, or SONET/SDH compliant frame, although other frame formats may be used. In one embodiment, the first portion of overhead may relate to: (1) coordination among network nodes of content and positional placement in the payload as well as payload encapsulation schemes for ingress and egress units based on messages carried in the overhead; (2) maintenance of control channels; and (3) network topology discover (e.g., location of nodes). In one embodiment, for SONET/SDH, the first portion of overhead may include the D1-D12, E1, E2, F1, F2, F3, K3, and/or a portion of N1 bytes, although other allocations may be used. For example, the first portion of overhead may further include the J0, K1, and/or K2 bytes. In one embodiment, overhead may be provided into a payload portion of a standardized transport packet or frame in accordance with the examples described with respect to FIGs. 3A or 3B, although other formats may be used.

Action 520 may include the overhead processor extracting and processing the first portion of overhead. For example, the overhead processor may extract and process the first portion of overhead in accordance with applicable standards such as SONET/SDH, OIF UNI 1.0 Signaling Specification, or OTN.

Action 525 may include the data processor processing a second portion of overhead. The second portion of overhead can be related to packet or frame delineation, payload delineation, as well as bit error monitoring and counting. For example, for SONET/SDH, the second portion of overhead may include: (1) delineation overhead bytes A1, A2; (2) pointer overhead bytes H1, H2, H3; (3) state monitoring overhead bytes B1, B2, M0, M1; (4) trace identification overhead byte J0; and (5) protection signaling and alarm indication overhead bytes K1, K2, although other overhead bytes may be processed. For example, the second portion of overhead may further include the J0, K1, and/or K2 bytes. Action 525 may include the data processor grooming and cross connecting payloads of ingress units in accordance for example with applicable standards such as SONET/SDH and OTN.

Action 530 may include the data processor and overhead processor transferring results of the overhead processing for example to a host-control plane controller for processing. Action 530 may also include the data processor transferring the payload for example to a network processor unit. For example, the payload may include packets and frames having formats such as, but not limited to, HDLC, IP, ATM, GFP, and Ethernet as well as SONET/SDH payload.

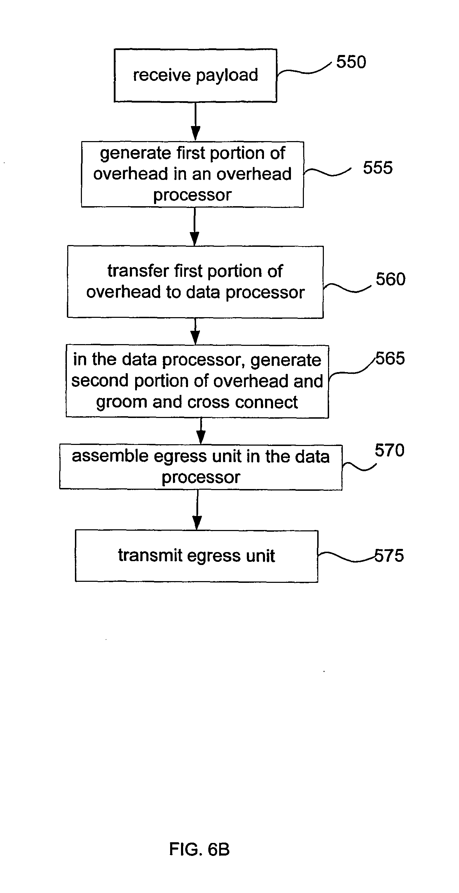

FIG. 6B depicts a flow diagram of one possible manner to generate egress units to be transported to a network, in accordance with an embodiment of the present invention. Action 550 may include a data processor receiving payload from a system fabric or other source. Payload may include packets and frames having formats such as, but not limited to, HDLC, IP, ATM, GFP, and Ethernet as well as SONET/SDH payload.

Action 555 may include generating in an overhead processor a first portion of overhead. The first portion of overhead may relate to: (1) network node coordination of content and placement in the payload as well as payload encapsulation schemes for ingress and egress units based on the messages carried in the overhead; (2) maintenance of control channels; and (3) network topology discover (e.g., location of nodes) in compliance with relevant standards such as SONET/SDH and OIF. In one embodiment, for SONET/SDH, the first portion of overhead may include D1-D12, E1, E2, F1, F2, F3, K3, and/or a portion of N1 bytes, although other allocations may be used. For example, the first portion of overhead may further include the J0, K1, and/or K2 bytes.

Action 560 may include transferring the first portion of overhead to the data processor using a payload section of a standardized transport frame, which can be an TFI-5, OTN, or SONET/SDH compliant frame, although other frame formats may be used. In one embodiment, overhead may be provided into a payload portion of a standardized transport packet or frame in accordance with the examples described with respect to FIGs. 3A or 3B, although other formats may be used.

Action 565 may include the data processor generating a second portion of overhead and performing cross connecting and grooming of payload contents that are to be provided in an egress unit. The second portion of overhead can be related to packet or frame delineation, payload delineation, as well as bit error monitoring and counting in accordance with applicable standards. For example, for SONET/SDH, the second portion of overhead may include: (1) delineation overhead bytes A1, A2; (2) pointer overhead bytes H1, H2, H3; (3) state monitoring overhead bytes B1, B2, M0, M1; (4) trace identification overhead byte J0; and (5) protection signaling and alarm indication overhead bytes K1, K2, although other allocations may be used. For example, the second portion of overhead may further include the J0, K1, and/or K2 bytes. For example, payload contents may include packets and frames having formats such as, but not limited to, HDLC, IP, ATM, GFP, and Ethernet as well as SONET/SDH payload. For example, grooming and cross connecting may be performed in accordance with applicable standards such as SONET/SDH and OTN.

Action 570 may include assembling an egress unit from the first and second portions of overhead and groomed and cross connected payload in compliance with applicable standards such as SONET/SDH and/or OTN.

Action 575 may include transmitting the egress unit to a network.

The drawings and the forgoing description gave examples of the present invention. While a demarcation between operations of elements in examples herein is provided, operations of one element may be performed by one or more other elements. The scope of the present invention, however, is by no means limited by these specific examples. Numerous variations, whether explicitly given in the specification or not, such as differences in structure, dimension, and use of material, are possible. The scope of the invention is at least as broad as given by the following claims.

## Claims

1. A method comprising:
receiving a payload portion at a data processor (205);
receiving at the data processor (205) an encapsulation from an overhead processor (215), wherein the encapsulation comprises an overhead section and payload section and wherein the payload section includes a first overhead portion;
forming a second overhead portion at the data processor (205);
forming an egress unit at the data processor (205) from a combination of the first and second overhead portions and the payload portion;
processing the first overhead portion at the overhead processor (215);
processing the second overhead portion of the overhead portion at the data processor (205);
wherein said second overhead portion processed at said data processor (205) is more time critical than said first overhead portion processed at said overhead processor (215).

2. A method comprising:
receiving at a data processor (205) an ingress unit including a payload portion and an overhead portion;
transferring from the data processor (205) a portion of the overhead portion as a first overhead portion in an encapsulation to an overhead processor (215), wherein the encapsulation comprises an overhead section and payload section and wherein the payload section includes the first overhead portion;
processing the first overhead portion at the overhead processor (215);
processing a second overhead portion of the overhead portion at the data processor (205);
wherein said second overhead portion processed at said data processor (205) is more time critical than said first overhead portion processed at said overhead processor (215).

3. The method of Claim 1 or 2, wherein the first overhead portion comprises overhead relating to control channel information.

4. The method of Claim 1 or 2, wherein the second overhead portion comprises overhead relating to packet or frame delineation.

5. The method of Claim 4, wherein the second overhead portion further comprises overhead relating to bit error monitoring and counting.

6. The method of Claim 1 or 2, wherein the transferring comprises transferring overhead using a switch fabric that provides intercommunication between the data processor (205) and overhead processor (215).

7. The method of Claim 1 or 2, wherein the encapsulation comprises a SONET/SDH compatible frame.

8. An apparatus comprising:
a data processor (205) configured to receive a payload portion;
an overhead processor (215) configured to transfer a first overhead portion to the data processor (205) in an encapsulation, wherein the encapsulation comprises an overhead section and payload section and wherein the payload section includes the first overhead portion,
wherein the data processor (205) comprises:
means for providing a second overhead portion, and
means for forming an egress unit from a combination of the first and second overhead portions and the payload portion; and
a link (210) configured to provide intercommunication between the data processor (205) and the overhead processor (215) and to at least transfer the encapsulation from the overhead processor (215) to the data processor (205);
the overhead processor (215) configured to process the first overhead portion and the data processor (205) configured to process the second overhead portion which is more time critical than said first overhead portion processed at said overhead processor (215).

9. An apparatus comprising:
an overhead processor (215);
a data processor (205) configured to receive an ingress unit including a payload portion and an overhead portion and to transfer a first portion of the overhead portion in an encapsulation to the overhead processor (215), wherein the encapsulation comprises an overhead section and payload section and wherein the payload section is configured to transfer the first overhead portion; and
a link (210) configured to provide intercommunication between the data processor (205) and the overhead processor (215) and to at least transfer the encapsulation from the data processor (205) to the overhead processor (215);
the overhead processor (215) configured to process the first overhead portion and the data processor (205) to process a second overhead portion which is more time critical than said first overhead portion processed at said overhead processor (215).

10. The apparatus of Claim 8 or 9, wherein the second overhead portion comprises overhead relating to packet or frame delineation.

11. The apparatus of Claim 8 or 9, wherein the first overhead portion comprises overhead relating to control channel information.

12. The apparatus of Claim 10, wherein the second overhead portion further comprises overhead relating to bit error monitoring and counting.

13. The apparatus of Claim 8 or 9, wherein the encapsulation comprises a SONET/SDH compatible frame.

14. The apparatus of Claim 8 or 9, wherein the link (210) comprises a communication using a switch fabric that is configured to provide intercommunication between the data processor (205) and overhead processor (215).

15. A system (200) comprising:
a physical layer interface capable to transfer and receive packets and frames with a network;
a framer comprising:
an overhead processor (215),
a data processor (205) configured to receive an ingress unit including a payload portion and an overhead portion and to transfer a first portion of the overhead portion in an encapsulation to the overhead processor (215), wherein the encapsulation comprises an overhead section and payload section and wherein the payload section is configured to transfer the first overhead portion and wherein the overhead processor (215) is configured to process the first overhead portion, and
a link (210) configured to provide intercommunication between the data processor (205) and the overhead processor (215) and to at least transfer the encapsulation from the data processor (205) to the overhead processor (215);
the overhead processor (215) configured to process the first overhead portion and the data processor (205) configured to process a second overhead portion which is more time critical than said first overhead portion processed at said overhead processor (215);
a network processor capable to perform frame and packet routing and protocol processing; and
an interface configured to at least provide intercommunication between the framer and the network processor.

## Patentansprüche

1. Verfahren, umfassend:
Empfang eines Nutzdatenanteils an einem Datenprozessor (205);
Empfang einer Kapselung von einem Overheadprozessor (215) am Datenprozessor (205), wobei die Kapselung einen Overheadabschnitt und einen Nutzdatenabschnitt umfasst und wobei der Nutzdatenabschnitt einen ersten Overheadanteil enthält;
Ausbilden eines zweiten Overheadanteils am Datenprozessor (205);
Ausbilden einer Abgangseinheit am Datenprozessor (205) aus einer Kombination des ersten und zweiten Overheadanteils sowie des Nutzdatenanteils;
Verarbeiten des ersten Overheadanteils am Overheadprozessor (215);
Verarbeiten des zweiten Overheadanteils des Overheadanteils am Datenprozessor (205);
wobei der zweite Overheadanteil, der am Datenprozessor (205) verarbeitet wird, zeitkritischer ist als der erste Overheadanteil, der am Overheadprozessor (215) verarbeitet wird.

2. Verfahren, umfassend:
Empfang einer Eingangseinheit, die einen Nutzdatenanteil und einen Overheadanteil enthält, an einem Datenprozessor (205);
Übertragen eines Anteils des Overheadanteils als ein erster Overheadanteil in einer Kapselung vom Datenprozessor (205) an einen Overheadprozessor (215), wobei die Kapselung einen Overheadabschnitt und einen Nutzdatenabschnitt umfasst und wobei der Nutzdatenabschnitt den ersten Overheadanteil enthält;
Verarbeiten des ersten Overheadanteils am Overheadprozessor (215);
Verarbeiten eines zweiten Overheadanteils des Overheadanteils am Datenprozessor (205);
wobei der zweite Overheadanteil, der am Datenprozessor (205) verarbeitet wird, zeitkritischer ist als der erste Overheadanteils, der am Overheadprozessor (215) verarbeitet wird.

3. Verfahren nach Anspruch 1 oder 2, wobei der erste Overheadanteil den Overhead umfasst, der die Steuerkanalinformationen betrifft.

4. Verfahren nach Anspruch 1 oder 2, wobei der zweite Overheadanteil den Overhead umfasst, der die Paket- oder Frameabgrenzung betrifft.

5. Verfahren nach Anspruch 4, wobei der zweite Overheadanteil ferner den Overhead umfasst, der das Überwachen und Zählen von Bitfehlern betrifft.

6. Verfahren nach Anspruch 1 oder 2, wobei das Übertragen die Übertragung des Overheads unter Verwendung einer Schaltstruktur umfasst, die eine Interkommunikation zwischen dem Datenprozessor (205) und dem Overheadprozessor (215) bereitstellt.

7. Verfahren nach Anspruch 1 oder 2, wobei die Kapselung einen SONET/SDH-kompatiblen Frame umfasst.

8. Vorrichtung, umfassend:
einen Datenprozessor (205), der eingerichtet ist, einen Nutzdatenanteil zu empfangen;
einen Overheadprozessor (215), der eingerichtet ist, einen ersten Overheadanteil in einer Kapselung an den Datenprozessor (205) zu übertragen, wobei die Kapselung einen Overheadabschnitt und einen Nutzdatenabschnitt umfasst und wobei der Nutzdatenabschnitt den ersten Overheadanteil enthält;
wobei der Datenprozessor (205) umfasst:
Mittel zum Bereitstellen eines zweiten Overheadanteils und
Mittel zum Ausbilden einer Abgangseinheit aus einer Kombination des ersten und zweiten Overheadanteils sowie des Nutzdatenanteils; und
eine Verbindung (210), die eingerichtet ist, die Interkommunikation zwischen dem Datenprozessor (205) und dem Overheadprozessor (215) bereitzustellen und mindestens die Kapselung vom Overheadprozessor (215) an den Datenprozessor (205) zu übertragen;
den Overheadprozessor (215), der eingerichtet ist, den ersten Overheadanteil zu verarbeiten, und den Datenprozessor (205), der eingerichtet ist, den zweiten Overheadanteil zu verarbeiten, welcher zeitkritischer ist als der erste Overheadanteil, der am Overheadprozessor (215) verarbeitet wird.

9. Vorrichtung, umfassend:
einen Overheadprozessor (215);
einen Datenprozessor (205), der eingerichtet ist, eine Eingangseinheit zu empfangen, die einen Nutzdatenanteil und einen Overheadanteil enthält, und einen ersten Anteil des Overheadanteils in einer Kapselung an den Overheadprozessor (215) zu übertragen, wobei die Kapselung einen Overheadabschnitt und einen Nutzdatenabschnitt umfasst und wobei der Nutzdatenabschnitt eingerichtet ist, den ersten Overheadanteil zu übertragen; und
eine Verbindung (210), die eingerichtet ist, die Interkommunikation zwischen dem Datenprozessor (205) und dem Overheadprozessor (215) bereitzustellen und mindestens die Kapselung vom Datenprozessor (205) an den Overheadprozessor (215) zu übertragen;
den Overheadproaessor (215), der eingerichtet ist, den ersten Overheadanteil zu verarbeiten, und den Datenprozessor (205), der eingerichtet ist, einen zweiten Overheadanteil zu verarbeiten, welcher zeitkritischer ist als der erste Overheadanteil, der am Overheadprozessor (215) verarbeitet wird.

10. Vorrichtung nach Anspruch 8 oder 9, wobei der zweite Overheadanteil den Overhead umfasst, der die Paket- oder Frameabgrenzung betrifft.

11. Vorrichtung nach Anspruch 8 oder 9, wobei der erste Overheadanteil den Overhead umfasst, der die Steuerkanalinformationen betrifft.

12. Vorrichtung nach Anspruch 10, wobei der zweite Overheadanteil ferner den Overhead umfasst, der das Überwachen und Zählen von Bitfehlern betrifft.

13. Vorrichtung nach Anspruch 8 oder 9, wobei die Kapselung einen SONET/SDH-kompatiblen Frame umfasst.

14. Vorrichtung nach Anspruch 8 oder 9, wobei die Verbindung (210) eine Kommunikation unter Verwendung einer Schaltstruktur umfasst, die eingerichtet ist, die Interkommunikation zwischen dem Datenprozessor (205) und dem Overheadprozessor (215) bereitzustellen.

15. System (200), umfassend:
eine Bitübertragungsschicht-Schnittstelle, die in der Lage ist, Pakete und Frames mit einem Netzwerk zu übertragen und zu empfangen;
einen Framer, umfassend:
einen Overheadprozessor (215);
einen Datenprozessor (205), der eingerichtet ist, eine Eingangseinheit zu empfangen, die einen Nutzdatenanteil und einen Overheadanteil enthält, und einen ersten Anteil des Overheadanteils in einer Kapselung an den Overheadprozessor (215) zu übertragen, wobei die Kapselung einen Overheadabschnitt und einen Nutzdatenabschnitt umfasst und wobei der Nutzdatenabschnitt eingerichtet ist, den ersten Overheadanteil zu übertragen, und wobei der Overheadprozessor (215) eingerichtet ist, den ersten Overheadanteil zu verarbeiten; und
eine Verbindung (210), die eingerichtet ist, die Interkommunikation zwischen dem Datenprozessor (205) und dem Overheadprozessor (215) bereitzustellen und mindestens die Kapselung vom Datenprozessor (205) an den Overheadprozessor (215) zu übertragen;
den Overheadprozessor (215), der eingerichtet ist, den ersten Overheadanteil zu verarbeiten, und den Datenprozessor (205), der eingerichtet ist, einen zweiten Overheadanteil zu verarbeiten, welcher zeitkritischer ist als der erste Overheadanteil, der am Overheadprozessor (215) verarbeitet wird;
einen Netzwerkprozessor, der in der Lage ist, das Paket- und Frame-Routing sowie die Protokollverarbeitung auszuführen; und
eine Schnittstelle, die eingerichtet ist, mindestens die Interkommunikation zwischen dem Framer und dem Netzwerkprozessor bereitzustellen.

## Revendications

1. Procédé comprenant :
la réception d'une partie de charge utile sur un processeur de données (205) ;
la réception sur le processeur de données (205) d'une encapsulation à partir d'un processeur d'entête (215), dans lequel l'encapsulation comprend une section d'entête et une section de charge utile et dans lequel la section de charge utile comprend une première partie d'entête ;
la formation d'une seconde partie d'entête sur le processeur de données (205) ;
la formation d'une unité de sortie sur le processeur de données (205) à partir d'une combinaison de première et seconde parties d'entête et de la partie de charge utile ;
le traitement de la première partie d'entête sur le processeur d'entête (215) ;
le traitement de la seconde partie d'entête de la partie d'entête sur le processeur de données (205) ;
dans lequel ladite seconde partie d'entête traitée sur ledit processeur de données (205) est plus critique en temps que ladite première partie d'entête traitée sur ledit processeur d'entête (215).

2. Procédé comprenant :
la réception sur un processeur de données (205) d'une unité d'entrée comprenant une partie de charge utile et une partie d'entête ;
le transfert à partir du processeur de données (205) d'une partie de la partie d'entête comme une première partie d'entête dans une encapsulation pour un processeur d'entête (215), dans lequel l'encapsulation comprend une section d'entête et une section de charge utile et dans lequel la section de charge utile comprend la première partie d'entête ;
le traitement de la première partie d'entête sur le processeur d'entête (215) ;
le traitement d'une seconde partie d'entête de la partie d'entête sur le processeur de données (205) ;
dans lequel ladite seconde partie d'entêté traitée sur ledit processeur de données (205) est plus critique en temps que ladite première partie d'entête traitée sur ledit processeur d'entête (215).

3. Procédé selon la revendication 1 ou 2, dans lequel la première partie d'entête comprend l'entête concernant les informations de canal de commande.

4. Procédé selon la revendication 1 ou 2, dans lequel la seconde partie d'entête comprend l'entête concernant la délinéation de paquet ou de trame.

5. Procédé selon la revendication 4, dans lequel la seconde partie d'entête comprend en outre l'entête concernant la surveillance et le comptage de bit d'erreur.

6. Procédé selon la revendication 1 ou 2, dans lequel le transfert comprend le transfert d'entête utilisant une toile de commutation qui fournit l'intercommunication entre le processeur de données (205) et le processeur d'entête (215).

7. Procédé selon la revendication 1 ou 2, dans lequel l'encapsulation comprend une trame compatible SONET/SDH.

8. Appareil comprenant :
un processeur de données (205) configuré pour recevoir une partie de charge utile ;
un processeur d'entête (215) configuré pour transférer une première partie d'entête au processeur de données (205) dans une encapsulation, dans lequel l'encapsulation comprend une section d'entête et une section de charge utile et dans lequel la section de charge utile comprend la première partie d'entête,
dans lequel le processeur de données (205) comprend :
un moyen pour fournir une seconde partie d'entête, et
un moyen pour former une unité de sortie à partir d'une combinaison des première et seconde parties d'entête et de la partie de charge utile ; et
une liaison (210) configurée pour fournir une intercommunication entre le processeur de données (205) et le processeur d'entête (215) et pour au moins transférer l'encapsulation à partir du processeur d'entête (215) au processeur de données (205) ;
le processeur d'entête (215) configuré pour traiter la première partie d'entête et le processeur de données (205) configuré pour traiter la seconde partie d'entête qui est plus critique en temps que ladite première partie d'entête traitée sur ledit processeur d'entête (215).

9. Appareil comprenant:
un processeur d'entête (215) ;
un processeur de données (205) configuré pour recevoir une unité d'entrée comprenant une partie de charge utile et une partie d'entête et pour transférer une première partie de la partie d'entête dans une encapsulation au processeur d'entête (215), dans lequel l'encapsulation comprend une section d'entête et une section de charge utile et dans lequel la section de charge utile est configurée pour transférer la première partie d'entête ; et
une liaison (210) configurée pour fournir une intercommunication entre le processeur de données (205) et le processeur d'entête (215) et pour au moins transférer l'encapsulation à partir du processeur de données (205) au processeur d'entête (215) ;
le processeur d'entête (215) configuré pour traiter la première partie d'entête et le processeur de données (205) pour traiter une seconde partie d'entête qui est plus critique en temps que ladite première partie d'entête traitée sur ledit processeur d'entête (215).

10. Appareil selon la revendication 8 ou 9, dans lequel la seconde partie d'entête comprend l'entête concernant la délinéation de paquet ou de trame.

11. Appareil selon la revendication 8 ou 9, dans lequel la première partie d'entête comprend l'entête concernant les informations de canal de commande.

12. Appareil selon la revendication 10, dans lequel la seconde partie d'entête comprend en outre l'entête concernant la surveillance et le comptage de bit d'erreur.

13. Appareil selon la revendication 8 ou 9, dans lequel l'encapsulation comprend une trame compatible SONET/SDH.

14. Appareil selon la revendication 8 ou 9, dans lequel la liaison (210) comprend une communication utilisant une toile de commutation qui est configurée pour fournir l'intercommunication entre le processeur de données (205) et le processeur d'entête (215).

15. Système (200) comprenant :
une interface de couche physique capable de transférer et de recevoir des paquets et des trames à partir d'un réseau ;
un trameur comprenant :
un processeur d'entête (215),
un processeur de données (205) configuré pour recevoir une unité d'entrée comprenant une partie de charge utile et une partie d'entête et pour transférer une première partie de la partie d'entête dans une encapsulation au processeur d'entête (215), dans lequel l'encapsulation comprend une section d'entête et une section de charge utile et dans lequel la section de charge de charge utile est configurée pour transférer la première partie d'entête et dans lequel le processeur d'entête (215) est configuré pour traiter la première partie d'entête, et
une liaison (210) configurée pour fournir l'intercommunication entre le processeur de données (205) et le processeur d'entête (215) et pour au moins transférer l'encapsulation du processeur de données (205) au processeur d'entête (215) ;
le processeur d'entête (215) configuré pour traiter la première partie d'entête et le processeur de données (205) configuré pour traiter une seconde partie d'entête qui est plus critique en temps que la première partie d'entête traitée sur ledit processeur d'entêté (215) ;
un processeur de réseau capable de réaliser le routage de trame et de paquet et le traitement de protocole ; et
une interface configurée pour au moins fournir une intercommunication entre le trameur et le processeur de réseau.
